# EUROPÄISCHE PATENTSCHRIFT

(11) **EP 3 599 446 B1**
(45) Veröffentlichungstag und Bekanntmachung des Hinweises auf die Patenterteilung: **07.06.2023**
(21) Anmeldenummer: 19184542.9
(22) Anmeldetag: 04.07.2019
(51) Int. Cl.: G01F 1/66

(54) **ULTRASCHALLZÄHLER**
ULTRASONIC FLOW COUNTER
COMPTEUR À ULTRASONS

(30) Priorität: 25.07.2018 DE 102018005845
(43) Veröffentlichungstag der Anmeldung: 29.01.2020
(73) Patentinhaber: Diehl Metering GmbH, 91522 Ansbach (DE)
(72) Erfinder: Sonnenberg, Hans-Michael, 91564 Neuendettelsau (DE)
(74) Vertreter: Diehl Patentabteilung

(56) Entgegenhaltungen:
- EP-A1- 1 701 140
- US-A1- 2018 010 940
- US-A1- 2018 120 139
- US-A1- 2018 136 024

## Beschreibung

Die Erfindung betrifft einen Ultraschallzähler zur Erfassung einer Durchflussmenge eines Fluids mit einem Fluideinlass, einem Fluidauslass und einem den Fluideinlass mit dem Fluidauslass verbindenden Strömungskanal, wobei der Strömungskanal ein Messrohr aufweist, das sich geradlinig in eine Strömungsrichtung erstreckt, wobei das Messrohr mehrere Vorsprünge aufweist, die an einer Innenwand einer den Strömungsquerschnitt des Messrohrs begrenzenden Seitenwand des Messrohrs ausgebildet sind und sich über zumindest einen Abschnitt der Länge des Messrohrs in die Strömungsrichtung und mit einer vorgegebenen Vorsprunghöhe gewinkelt, insbesondere senkrecht, zur Seitenwand erstrecken.

Eine Möglichkeit einen Durchfluss durch ein Messrohr zu messen, sind Ultraschallzähler. Bei diesem wird ein Ultraschallwandler genutzt, um eine Ultraschallwelle in ein durch das Messrohr strömendes Fluid einzukoppeln, wobei diese auf einem geraden Weg oder nach mehreren Reflexionen an Wänden oder speziellen Reflexionselementen zu einem zweiten Ultraschallwandler geführt wird. Aus der Laufzeit der Ultraschallwelle zwischen den Ultraschallwandlern bzw. aus einem Laufzeitunterschied bei der Vertauschung von Sender und Empfänger können eine Durchflussgeschwindigkeit durch das Messrohr und somit bei bekanntem Rohrquerschnitt eine Durchflussmenge bestimmt werden.

Eine wesentliche Herausforderung beim Design eines solchen Ultraschallzählers ist es, eine möglichst hohe Messgenauigkeit über einen breiten Messbereich zu erreichen. Typischerweise weist die gemessene Laufzeit einen laufzeitunabhängigen Fehler auf, der dazu führt, dass ein relativer Fehler der Messgenauigkeit mit sinkender Durchflussgeschwindigkeit steigt. Eine Möglichkeit dies zu kompensieren ist es, geringere Messrohrquerschnitte zu nutzen. Dies führt jedoch dazu, dass der Ultraschallzähler insgesamt einen hohen Strömungswiderstand aufweist, was bei großen Durchflüssen nachteilig ist. Eine weitere Einschränkung des nutzbaren Messbereichs ist es, dass bei bestimmten Strömungsgeschwindigkeiten, beispielsweise aufgrund von Stauungen an den Reflexionselementen, plötzliche und unter Umständen hysteretische Umschläge im Strömungsprofil auftreten können. Treten solche Strömungsumschläge bei einer bestimmten Durchflussgeschwindigkeit auf, kann der Ultraschallzähler mit hoher Genauigkeit nur ausschließlich unterhalb oder nur ausschließlich oberhalb dieser bestimmten Durchflussgeschwindigkeit genutzt werden.

Aus der Druckschrift DE 10 2016 008 302 A1 ist eine Nutzung von Messrohren mit gewellter Innenfläche bekannt. Die Wellung der Seitenwand bricht eine Rotationssymmetrie der Strömung, was dazu beitragen kann, plötzliche Umschläge der Strömungsführung zu unterdrücken. Sollen solche Ultraschallzähler jedoch über einen großen Dynamikbereich von Durchflussmengen eingesetzt werden, ist ein Messrohr mit einem relativ großen Außendurchmesser erforderlich, um eine allzu starke Erhöhung des Durchflusswiderstandes zu vermeiden. Zugleich sollen jedoch Gehäuseöffnungen eines Ultraschallzählers im Einlass- bzw. Auslassbereich bestimmte Querschnitte nicht überschreiten. Andere Dokumente aus dem Stand der Technik sind zum Beispiel US 2018/ 136 024 A1, US 2018/120 139 A1, US 2018 010 940 A1 and EP 1 701 140 A1.

Der Erfindung liegt somit die Aufgabe zugrunde, einen Ultraschallzähler anzugeben, der demgegenüber verbessert ist und der bei gleicher Baugröße insbesondere einen geringeren Strömungswiderstand bzw. eine höhere Messdynamik aufweist bzw. der kleinerbauend realisiert werden kann.

Die Aufgabe wird erfindungsgemäß durch einen Ultraschallzähler der eingangs genannten Art gelöst, wobei wenigstens zwei der Vorsprünge voneinander unterschiedliche Vorsprunghöhen aufweisen.

Erfindungsgemäß weist das Messrohr mehrere erste Vorsprünge auf, deren Vorsprunghöhe größer oder gleich einer Grenzvorsprunghöhe ist und mehrere zweite Vorsprünge, deren Vorsprunghöhe kleiner als die Grenzvorsprunghöhe ist, wobei in Umfangsrichtung des Messrohrs zwischen zwei an der Innenwand ausgebildeten ersten Vorsprüngen jeweils wenigstens ein, vorzugsweise wenigstens zwei, zweite Vorsprünge ausgebildet sind.

Die Vorsprunghöhe der ersten Vorsprünge kann zwischen 1,5-mal und 2-mal so groß sein wie die Vorsprunghöhe der zweiten Vorsprünge und/oder die Vorsprunghöhe der zweiten Vorsprünge kann zwischen 0,5-mal und 1,1-mal so groß sein wie der Abstand zwischen in Umfangsrichtung des Messrohrs benachbarten Vorsprüngen. Im Rahmen der Erfindung wurde erkannt, dass durch diese Vorsprunggeometrien eine hohe Messgenauigkeit über einen großen Dynamikbereich des Durchflusses hinweg erreicht werden kann.

In zumindest einem Abschnitt des Messrohrs kann eine Vorsprungsbreite wenigstens eines der Vorsprünge zum Fluidauslass hin zunehmen. Hierdurch kann das Fluid in dem Messrohr beschleunigt werden, wodurch eine Strömung weiter stabilisiert werden kann. Insbesondere kann sich der Abschnitt, in dem die Vorsprungbreite zunimmt, über zumindest 60 %, 70 % oder 80 % der Länge des Messrohrs erstrecken. Der Bereich kann insbesondere an dem fluideinlassseitigen Ende des Messrohrs beginnen. Die Vorsprungbreite beschreibt die Ausdehnung der einzelnen Vorsprünge in Umfangsrichtung des Messrohrs.

In einem fluidauslassseitigen Abschnitt des Messrohrs kann die Seitenwand des Messrohrs an verschiedenen Positionen in Umfangsrichtung an verschiedenen Positionen in Strömungsrichtung enden. Der fluidauslassseitige Abschnitt des Messrohrs kann insbesondere an jener Position in Strömungsrichtung beginnen, an der die Seitenwand in Umfangsrichtung an der frühesten Position in Strömungsrichtung endet. Durch ein abgestuftes Ende des Messrohrs kann der Strömungsquerschnitt am Ende des Messrohrs vergrößert werden, was insbesondere ein Stauen beispielsweise aufgrund eines im Strömungspfad angeordneten Reflexionselements vermeiden oder zumindest reduzieren kann.

Die Seitenwand kann sich in jenen Bereich in Umfangsrichtung, an denen die Vorsprünge ausgebildet sind, weiter in Richtung des Fluidauslasses erstrecken als in in Umfangsrichtung zwischen diesen Bereichen liegenden Zwischenbereichen. Der Strömungsquerschnitt wird im Endbereich des Messrohrs somit dadurch erweitert, dass zwischen den Vorsprüngen ausgebildete Rillen vertieft werden. Da in diesen Rillen, wie vorangehend erläutert, bei niedrigen Durchflussvolumen die Strömungsgeschwindigkeit relativ gering ist, führt dies dazu, dass bei niedrigen Strömungsgeschwindigkeiten das frühere enden der Seitenwand nur zu einer geringfügigen Verringerung der Durchflussgeschwindigkeit führt, so dass die Messgenauigkeit bei niedrigen Durchflussvolumen verbessert werden kann.

In dem fluidauslassseitigen Abschnitt kann die oder eine Vorsprungbreite wenigstens eines der Vorsprünge zum Fluidauslass hin abnehmen. Auch hierdurch kann erreicht werden, dass der Strömungswiderstand des gesamten Messrohrs insbesondere bei hohen Durchflussvolumen sinkt, wobei insbesondere Stauungen an Reflexionselementen für die Ultraschallstrahlung vermieden werden. Soll die Vorsprungbreite des Messrohrs in einem ersten Abschnitt zunächst zum Fluidauslass hin zunehmen und in dem fluidauslassseitigen Abschnitt zum Fluidauslass hin abnehmen, kann das Messrohr dennoch durch ein Spritzgussverfahren hergestellt werden, indem zwei spritzgegossene Teilkörper in einem Bereich zusammengesetzt werden, in dem der fluidauslassseitige Abschnitt beginnt. Die gegenläufigen Änderungen der Vorsprungbreiten können hierbei dazu beitragen, dass die Teilkörper gut entformbar sind.

Die Vorsprunghöhe wenigstens eines der Vorsprünge kann an jener Position in Strömungsrichtung stufenartig reduziert werden, an der in einem in Umfangsrichtung des Messrohrs zu dem Vorsprung benachbarten Zwischenbereich des Messrohrs die dortige Seitenwand endet. Endet die Seitenwand in Zwischenbereichen zwischen den Vorsprüngen an der gleichen Position, kann die stufenartige Reduktion aller Vorsprünge in eine Ebene erfolgen, in der der fluidauslassseitige Abschnitt des Messrohrs beginnt. Eine stufenartige Reduzierung kann insbesondere vorteilhaft sein, wenn in dieser Ebene zwei Teilkörper des Messrohrs zusammengesetzt werden, da somit ein definierter Übergang zwischen den Teilkörpern erreicht werden kann.

Die oder eine Vorsprungbreite der Vorsprünge kann für wenigstens zwei der Vorsprünge voneinander unterschiedlich sein und/oder ein Abstand zwischen den Vorsprüngen in Umfangsrichtung des Messrohrs kann für wenigstens zwei Paare von in der Umfangsrichtung zueinander benachbarten der Vorsprünge voneinander unterschiedlich sein. Dadurch kann eine Drehsymmetrie des Messrohrs und somit auch der durch das Messrohr geführten Strömung reduziert werden, was zur Stabilisierung der Strömung beitragen kann, da ein plötzliches Umschlagen der Strömung zwischen aufgrund der Drehsymmetrie äquivalenten Strömungsprofilen vermieden werden kann.

Die Vorsprungsbreite der Vorsprünge kann zwischen 0,7 mm und 2,0 mm sein. Diese Breite kann die Breite des Vorsprungs an der Basis des Vorsprungs, also radial außenliegend, sein. Die Breite der Vorsprünge kann zur Mitte des Messrohrs hin geringfügig reduziert werden. Hierdurch kann einerseits die Kontinuität des Übergangs von einer laminaren zu einer turbulenten Strömung verbessert werden, andererseits kann eine Entformbarkeit bei einem Spritzguss des Messrohres verbessert werden.

Eine Vorsprunglänge der Vorsprünge kann in Strömungsrichtung größer sein als die Vorsprunghöhe und/oder die oder eine Vorsprungbreite der Vorsprünge kann kleiner sein als die Vorsprunghöhe. Anders ausgedrückt werden vorzugsweise schmale und in Strömungsrichtung ausgedehnte Vorsprünge genutzt. Die Vorsprünge können sich insbesondere über die gesamte Länge des Messrohrs erstrecken.

In dem Fall, dass der Strömungskanal wenigstens einen Bypass aufweist, kann der Bypass zumindest abschnittsweise durch mehrere separate Bypasskanäle gebildet werden. Vorzugsweise ist der Strömungsquerschnitt jedes der Bypasskanäle kleiner als der Strömungsquerschnitt des Messrohrs. Hierdurch kann erreicht werden, dass bei relativ geringen Durchflussvolumen durch den Strömungskanal, wenn die Strömung in den Bypasskanälen laminar ist, die Strömungsgeschwindigkeit in den Bypasskanälen geringer ist als im Messrohr, insbesondere als im Messbereich des Messrohrs. Zugleich schlägt jedoch, ähnlich wie zu den Randbereichen obig erläutert, die Strömung in den Bypasskanälen erst bei relativ hohen Durchflussvolumen zu einer turbulenten Strömung um, so dass ein größerer Anteil des durch den Strömungskanal geführten Fluidvolumens an dem Messrohr und somit dem Messabschnitt des Messrohrs vorbei durch die Bypasskanäle geführt wird. Die Strömungsgeschwindigkeit in dem Messrohr bzw. in dem Messbereich steigt somit durch die Nutzung der Bypasskanäle weniger als linear mit einem Anstieg des geförderten Fluidvolumens. Hierdurch kann die Empfindlichkeit der Messung bei geringem Durchflussvolumen verbessert werden, während ein allzu großer Strömungswiderstand bzw. ein Sättigen der Messung bei hohen Durchflussvolumen vermieden wird. Der Strömungsquerschnitt des Bypasskanals kann wenigstens um den Faktor 3, den Faktor 5 oder den Faktor 10 kleiner sein als der Strömungsquerschnitt des Messrohrs, insbesondere als der Strömungsquerschnitt des Messrohrs an seiner engsten Stelle.

Die Bypasskanäle können vorzugsweise kürzer sein als das Messrohr, wobei die Bypasskanäle fluideinlassseitig und/oder fluidauslassseitig in ein gemeinsames Bypassvolumen münden, das die Bypasskanäle fluidisch mit dem Strömungskanal koppelt. Die Bypasskanäle können sich insbesondere parallel zum Messrohr erstrecken und in Strömungsrichtung kürzer als dieses sein. Die Summe der Länge der Bypasskanäle und des Bypassvolumens bzw. der Bypassvolumina kann hierbei der Länge der Messrohrs entsprechen, das heißt, dass der gesamte Bypass parallel zum Messrohr geführt sein kann. Insbesondere können das Bypassvolumen und/oder die Bypasskanäle in einem Zwischenraum zwischen dem Messrohr und einem Außenrohr angeordnet sein, wobei das Außenrohr insbesondere zumindest abschnittsweise die Außenwand des Strömungskanals ausbildet. Eine Nutzung von relativ kurzen, relativ dünnen Bypasskanälen ermöglicht es, dass diese bei einer turbulenten Strömung einen erheblich geringen Strömungswiderstand aufweisen als bei einer laminaren Strömung.

Die Bypasskanäle können in Strömungsrichtung um wenigstens den Faktor 2, insbesondere um wenigstens den Faktor 5 oder 10, kürzer sein als das Messrohr. Hierdurch können die oben genannten Vorteile besonders gut erreicht werden.

Die mehreren Bypasskanäle können in Umfangsrichtung des Messrohrs um das Messrohr herum verteilt angeordnet sein. Insbesondere können die Bypasskanäle gleichmäßig entlang des Umfangs verteilt sein und/oder gleich geformt sein. Ein einströmendes Fluid kann somit näherungsweise gleichmäßig auf die Bypasskanäle verteilt werden.

Die Bypasskanäle können, wie bereits obig erläutert, zwischen einem den Messkanal abschnittsweise ausbildenden Außenrohr und dem Messrohr angeordnet sein. Dies ermöglicht einen einfachen und kompakten Aufbau des Ultraschallzählers.

Die Bypasskanäle können durch eine zwischen dem Messrohr und dem Außenrohr angeordnete Bypasseinrichtung oder durch diese gemeinsam mit einer Außenwand des Messrohrs und/oder einer Innenwand des Außenrohrs gebildet werden. Die Bypasseinrichtung kann insbesondere ringförmig sein, wobei das Messrohr durch die Bypasseinrichtung hindurchgeführt ist. Die Bypasseinrichtung kann mehrere Durchbrechungen in Strömungsrichtung aufweisen, die die Bypasskanäle bilden. Alternativ oder ergänzend kann die Bypasseinrichtung radial außenseitige Vorsprünge, die an dem Außenrohr anliegen und/oder radial innenseitige Vorsprünge, die an dem Messrohr anliegen, aufweisen, um gemeinsam mit diesem Rohr oder diesen Rohren jeweilige Bypasskanäle zu bilden. Die Bypasseinrichtung kann auch einteilig mit dem Messrohr ausgebildet sein. Beispielsweise kann eine Außenwand eines Messrohrs in einem Abschnitt nach außen hin verdickt sein, wobei diese Verdickung axiale Durchbrechungen aufweist, die die Bypasskanäle bilden. Bypasskanäle können auch gebildet werden, indem an der Außenwand des Messrohrs abragende, insbesondere radial abragende, Vorsprünge vorhanden sind, die sich insbesondere bis zu einer Innenwand eines Außenrohrs erstrecken, um die Bypasskanäle zu bilden.

Das Außenrohr kann das Messrohr vollständig aufnehmen, wobei eine in Strömungsrichtung verlaufende Mittelgerade des Messrohrs gegenüber einer in Strömungsrichtung laufenden Mittelgerade des Außenrohrs versetzt ist. Eine asymmetrische Anordnung des Messrohrs im Außenrohr und somit insbesondere im Strömungsquerschnitt des Strömungskanals kann eine Rotationssymmetrie des Strömungsprofils brechen und somit zur Strömungsstabilisierung beitragen. Zudem kann durch diese Anordnung der Abstand zwischen der Außenwand des Messrohrs und der Innenwand des Außenrohrs variieren, was beispielsweise dazu genutzt werden kann, die Größen von Bypasskanälen in Radialrichtung zu variieren. Eine solche versetzte Anordnung des Messrohrs bezüglich des Außenrohrs kann beispielsweise dadurch realisiert werden, dass eine Bypasseinrichtung bzw. ein Bypassring genutzt wird, dessen das Messrohr aufnehmende Ausnehmung gegenüber der Mitte dieser Bypasseinrichtung bzw. des Bypassrings versetzt ist.

In dem Ultraschallzähler können wenigstens zwei der Bypasskanäle voneinander unterschiedliche Längen in Strömungsrichtung und/oder unterschiedliche Querschnittsformen aufweisen. Alternativ oder ergänzend können für wenigstens einen der Bypasskanäle zwei diesen Bypasskanal in Umfangsrichtung des Messrohrs begrenzende Seitenwände an in Strömungsrichtung unterschiedlichen Positionen enden. Durch die genannten Unterschiede zwischen den Bypasskanälen können insbesondere Drehsymmetrien des Strömungsprofils reduziert werden und somit die Strömung stabilisiert werden. Die Begrenzung eines Bypasskanals durch unterschiedlich lange Wände kann aufgrund des Coanda-Effekts dazu führen, dass ein aus diesem Bypasskanal austretender Strömungsabschnitt gegenüber der Strömungsrichtung abgelenkt wird, wodurch ebenfalls eine Strömungsstabilisierung erreicht werden kann. Verschiedene Längen und/oder Formen von Bypasskanälen können zudem dazu führen, dass ein Umschlagen von einer laminaren zu einer turbulenten Strömung in den verschiedenen Bypasskanälen bei unterschiedlichen Durchflussvolumen erfolgt. Dies kann dazu dienen, einen mehrstufigen Übergang des Strömungsverhaltens zu erreichen, wodurch plötzliche Strömungsumschläge und/oder Hystereseeffekte vermieden werden können.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel eines nicht erfindungsgemäßen Ultraschallzählers,
- Fig. 2: eine geschnittene Ansicht des in Fig. 1 gezeigten Ultraschallzählers,
- Fig. 3 bis 6: Bypasseinrichtungen, die in alternativen Ausführungsbeispielen des nichterfindungsgemäßen Ultraschallzählers statt der in Fig. 1 und 2 gezeigten Bypasseinrichtung genutzt werden können,
- Fig. 7: ein Messrohr eines alternativen Ausführungsbeispiels eines erfindungsgemäßen Ultraschallzählers,
- Fig. 8: verschiedene Abschnitte des Strömungsprofils des in Fig. 7 gezeigten Messrohrs,
- Fig. 9: eine dreidimensionale Ansicht des in Fig. 7 dargestellten Messrohrs, und
- Fig. 10 bis 12: Messrohr weiterer Ausführungsbeispiele eines erfindungsgemäßen Ultraschallzählers.

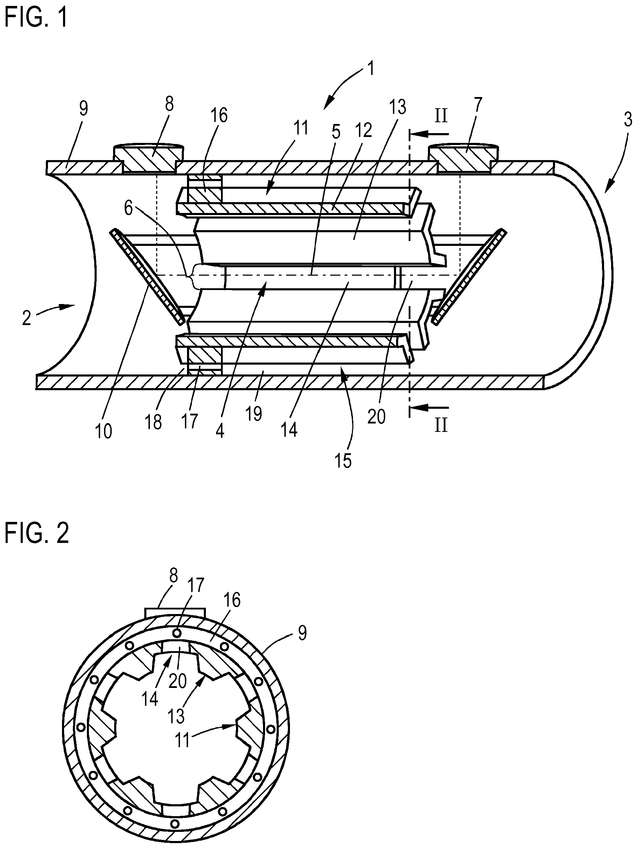

Fig. 1 zeigt einen Ultraschallzähler 1 zur Erfassung einer Durchflussmenge eines Fluids. Der Ultraschallzähler 1 weist einen Fluideinlass 2 und einen Fluidauslass 3 auf, die dazu dienen, das Fluid zu dem Ultraschallzähler 1 bzw. von diesem abzuführen. Ein Strömungskanal 4 verbindet den Fluideinlass 2 mit dem Fluidauslass 3.

Zur Messung der Durchflussmenge wird eine Durchflussgeschwindigkeit des Fluids bestimmt, in dem ein Ultraschallstrahl 5 im Wesentlichen parallel zur Strömungsrichtung durch einen Messbereich 6 gesendet wird und eine Laufzeit und/oder eine Frequenzverschiebung des Ultraschallsignals ausgewertet wird. Dieses Vorgehen ist grundsätzlich im Stand der Technik bekannt und soll nicht detailliert erläutert werden. Die Ultraschallwandler 7, 8 zur Bereitstellung bzw. zum Empfang des Ultraschallsignals sind an der Seitenwand eines Außenrohrs 9 angeordnet, das den Strömungskanal 4 zumindest abschnittsweise ausbildet. Das Senden und der Empfang der Ultraschallsignale durch die Ultraschallwandler 7, 8 können näherungsweise orthogonal zur Strömungsrichtung erfolgen. Um den Ultraschallstrahl im Messbereich 6 im Wesentlichen parallel zur Strömungsrichtung zu führen, werden Reflexionselemente 10 verwendet.

Die gemessenen Laufzeitunterschiede hängen von der Strömungsgeschwindigkeit des Fluids im Messbereich 6 ab. Da sich ein Messfehler typischerweise aus einem absoluten und einem relativen Fehler zusammensetzt, steigt die Messgenauigkeit typischerweise mit steigender Strömungsgeschwindigkeit im Messbereich 6. Um eine hohe Messgenauigkeit auch bei geringen Durchflussmengen zu erreichen, ist es bekannt, in den Strömungskanal 4 ein Messrohr 11 einzusetzen, das den Strömungsquerschnitt des Strömungskanals 4 reduziert. Soll eine hohe Messgenauigkeit für geringe Durchflussvolumen erreicht werden, sollte der Strömungsquerschnitt im Messbereich 6 möglichst gering sein. Zugleich führt ein kleiner Strömungsquerschnitt im Messbereich 6 jedoch dazu, dass der Ultraschallzähler einen großen Strömungswiderstand aufweist, was typischerweise nachteilig ist, und dazu dass große Durchflussmengen unter Umständen nicht korrekt erfasst werden können.

Um sowohl eine hohe Messgenauigkeit bei geringen Durchflussmengen als auch einen relativ geringen Strömungswiderstand und eine ausreichend genaue Messbarkeit bei hohen Durchflussvolumen zu erreichen werden in dem gezeigten Ausführungsbeispiel mehrere Strömungspfade bzw. Abschnitte des Strömungsquerschnitts für das Fluid bereitgestellt. Durch einen Wechsel der Strömung von einer laminaren Strömung zu einer turbulenten Strömung bei verschiedenen Durchflussvolumen in den einzelnen Strömungspfaden bzw. Abschnitten wird erreicht, dass die Strömungsgeschwindigkeit im Messbereich 6 nicht linear mit dem Durchflussvolumen variiert, sondern langsamer.

Hierzu werden einerseits an der Seitenwand 12 des Messrohrs 11 mehrere Vorsprünge 13 vorgesehen, wodurch zwischen diesen Vorsprüngen 13 Rillen 14 resultieren. In den Rillen 14 ist der Abstand des durch diese strömenden Fluids zu der benachbarten Seitenwand 12 relativ gering, weshalb bei einer laminaren Strömung verglichen mit dem Messbereich 6 eine niedrigere Strömungsgeschwindigkeit resultiert. Zugleich schlägt jedoch die Strömung in den Rillen 14 erst bei relativ großem Durchflussvolumen zu einer turbulenten Strömung um, so dass bei höhen Durchflüssen der Anteil des Fluids, der durch die Rillen 14 geführt wird, verglichen mit dem Anteil des Fluids, der durch den Messbereich 6 geführt wird, ansteigt. Dies führt dazu, dass die Durchflussgeschwindigkeit im Messbereich 6 mit steigendem Durchflussvolumen weniger stark steigt, als dies bei einem runden Rohrquerschnitt oder Ähnlichem der Fall wäre.

Im Ausführungsbeispiel sind Vorsprünge 13 gezeigt, die in Umfangsrichtung des Messrohrs 11 relativ breit sind. Dies dient insbesondere der klareren Darstellung des Prinzips. Zur Reduzierung des Strömungswiderstands bei großen Durchflussvolumen kann es vorteilhaft sein, Vorsprünge 13 zu nutzen, die in Umfangsrichtung des Messrohrs 11 relativ schmal sind, wie dies später noch mit Bezug auf andere Ausführungsbeispiele dargestellt werden wird.

Werden, wie in dem in Fig. 1 gezeigten Ausführungsbeispiel, Vorsprünge 13 genutzt, die alle die gleiche Vorsprunghöhe aufweisen, so kann dies dazu führen, dass in allen Rillen 14 im Wesentlichen gleichzeitig ein Wechsel von einer laminaren zu einer turbulenten Strömung erfolgt. Dies kann, je nach konkretem Aufbau des Ultraschallzählers 1, dazu führen, dass der Zusammenhang zwischen der Messgröße, also beispielsweise zwischen einem Laufzeitunterschied, und dem Durchflussvolumen in diesem Bereich einen Sprung aufweist oder sogar hysteretisch ist, was eine zuverlässige Messung in diesem Bereich erschwert oder sogar unmöglich macht. Um dies zu vermeiden können, wie später noch detailliert erläutert werden wird, Vorsprünge 13 mit voneinander unterschiedlichen Vorsprunghöhen verwendet werden. Im gezeigten Ausführungsbeispiel wird stattdessen jedoch ein zusätzlicher Fluidpfad über den Bypass 15 bereitgestellt. Der Bypass 15 kann einen Teil des durch den Strömungskanal 4 geführten Fluids an dem Messrohr 11 vorbeifü h ren.

Zur Ausbildung dieses Bypasses 15 wird eine ringförmige Bypasseinrichtung 16 genutzt, die das Messrohr 11 von dem Außenrohr 9 beabstandet. Die Anordnung der Bypasseinrichtung 16 ist insbesondere Fig. 2 zu entnehmen, die einen Schnitt des Ultraschallzählers 1 entlang der Linie II-II in Fig. 1 zeigt, wobei die Blickrichtung in Fig. 2 zum Fluideinlass 2 hin ist und das Reflexionselement 10 und dessen Halterung aus Übersichtlichkeitsgründen nicht dargestellt sind. Durch Durchbrechungen der Bypasseinrichtung 16 in Strömungsrichtung werden mehrere in Umfangsrichtung um das Messrohr 11 herum angeordnete Bypasskanäle 17 gebildet, die gemeinsam mit den Bypassvolumina 18, 19, die die Bypasskanäle 17 mit dem Strömungskanal 4 koppeln, den Bypass 15 ausbilden. Die einzelnen Bypasskanäle 17 sind erheblich kürzer als das Messrohr 11 und weisen verglichen mit dem Messbereich 6 bzw. den Rillen 14 einen kleineren Strömungsquerschnitt, also eine kleinere Fläche senkrecht zur Strömungsrichtung, auf.

Solange das Fluid sowohl in den Bypasskanälen 17 als auch in dem Messrohr 11 laminar strömt, ist die mittlere Strömungsgeschwindigkeit in den Bypasskanälen 17 somit erheblich geringer als im Messrohr, da das Fluid in den Bypasskanälen 17 einen sehr geringen Wandabstand aufweist. Ein Umschlagen zu einer turbulenten Strömung führt bei den Bypasskanälen 17, insbesondere aufgrund ihrer kurzen Länge, jedoch dazu, dass die dortige Strömungsgeschwindigkeit verglichen mit der Strömungsgeschwindigkeit im Messrohr bei einer Vergrößerung des Volumenstroms stärker steigt, so dass bei größeren Durchflüssen ein größerer Anteil des Fluids durch die Bypasskanäle 17 geführt wird, also bei geringen Durchflüssen. Beispielsweise kann bei sehr geringen Durchflussvolumen die Strömung sowohl in den Bypasskanälen 17 als auch im gesamten Messrohr 11 laminar sein. Bereits bei relativ geringen Durchflussmengen resultieren im Messbereich 6 aufgrund der großen Wandabstände des Fluids turbulente Strömungen. Mit steigendem Durchflussvolumen schlägt dann zunächst die Strömung in den Rillen 14 zu einer turbulenten Strömung um, so dass ein größerer Anteil des Fluids an dem Messbereich 6 vorbeigeführt werden kann. Bei einer weiteren Erhöhung des Durchflussvolumens schlägt anschließend die Strömung in den Bypasskanälen 17 zu einer turbulenten Strömung um. Durch diese mehrstufige Strömungsänderung werden Sprünge bzw. Hysteresen in dem Zusammenhang zwischen der Strömungsgeschwindigkeit bzw. der Messgröße und dem Durchflussvolumen reduziert oder vollständig unterdrückt.

Durch die Nutzung der Vorsprünge 13 wird der Strömungsquerschnitt im Messrohr 11 zumindest geringfügig reduziert. Bei hohen Strömungsvolumen könnte dies dazu führen, dass durch das aus dem Messrohr 11 austretende Fluid einem Reflexionselement 10 aufgestaut wird, was zu plötzlichen Strömungsumschlägen oder anderen Störungen der Messung führen kann. Um dies zu vermeiden, kann es vorteilhaft sein, den Strömungsquerschnitt vor dem Relektor 10 rechtzeitig zu weiten, was beispielsweise dadurch erreicht werden kann, dass die Seitenwand 12 des Messrohrs 11 im Bereich der Rillen 14, also in einem Zwischenbereich 20 zwischen den Vorsprüngen 13, durchbrochen wird.

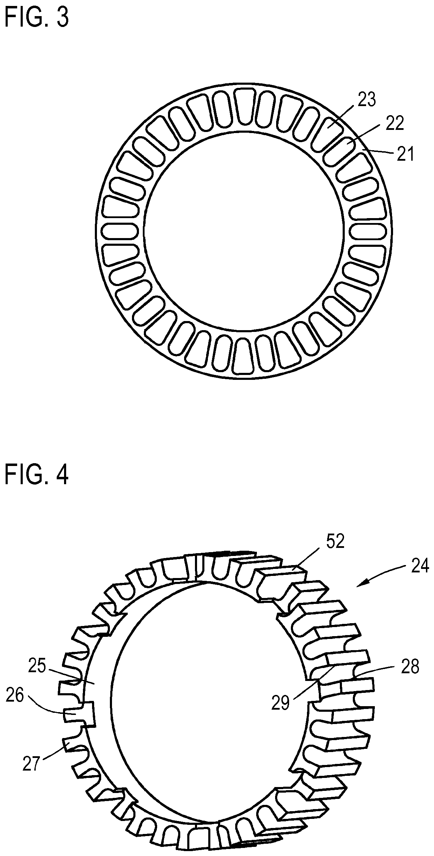

Die in Fig. 1 und 2 gezeigte Bypasseinrichtung 16 weist Bypasskanäle 17 auf, die im Wesentlichen gleich geformt sind und gleichmäßig entlang des Umfangs des Messrohrs 11 angeordnet sind. Zur Reduktion einer Drehsymmetrie und/oder zu einer Glättung einer Kurve, die den Zusammenhang zwischen Durchflussvolumen und Strömungsgeschwindigkeit im Messbereich 6 beschreibt, kann es jedoch vorteilhaft sein, voneinander verschiedene Bypasskanäle zu nutzen. Ein Beispiel hierfür ist in Fig. 3 dargestellt. Die Bypasseinrichtung 21 weist hierbei zwei unterschiedliche Arten von Bypasskanälen 22, 23 auf, die um das Messrohr umlaufend abwechselnd angeordnet sind.

In den bisherigen Ausführungsbeispielen werden die Bypasskanäle 17, 22, 23 umfangsseitig jeweils vollständig durch die Bypasseinrichtung 16, 21 umschlossen. Um einen kleinerbauenden Ultraschallzähler zu realisieren bzw. die Herstellung der Bypasseinrichtung zu vereinfachen, kann es vorteilhaft sein, die Bypasskanäle nur teilweise durch die Bypasseinrichtung zu begrenzen und verbleibende Seitenwände durch das Außenrohr 9 oder das Messrohr 11 bereitzustellen. Ein Beispiel hierfür ist in Fig. 4 dargestellt. Die Bypasseinrichtung 24 legt mit einer Innenfläche 25 an dem Messrohr 11 an. Von dieser erstrecken sich Vorsprünge 26, 27 radial nach außen, um mit ihrer Außenfläche 52 an dem Außenrohr 9 anzuliegen.

Die Bypasseinrichtung 24 nutzt zudem Vorsprünge 26, 27, die sich in Strömungsrichtung unterschiedlich weit erstrecken. Hierdurch wird erreicht, dass für zumindest einige der Bypasskanäle zwei den jeweiligen Bypasskanal in Umfangsrichtung des Messrohrs 11 begrenzende Seitenwände 28, 29 an in Strömungsrichtung unterschiedlichen Positionen enden. Aufgrund des Coanda-Effekt wird hierdurch das aus diesem Bypasskanal austretende Fluid abgelenkt, was zur Brechung einer Drehsymmetrie und somit zur Stabilisierung der Strömung beitragen kann.

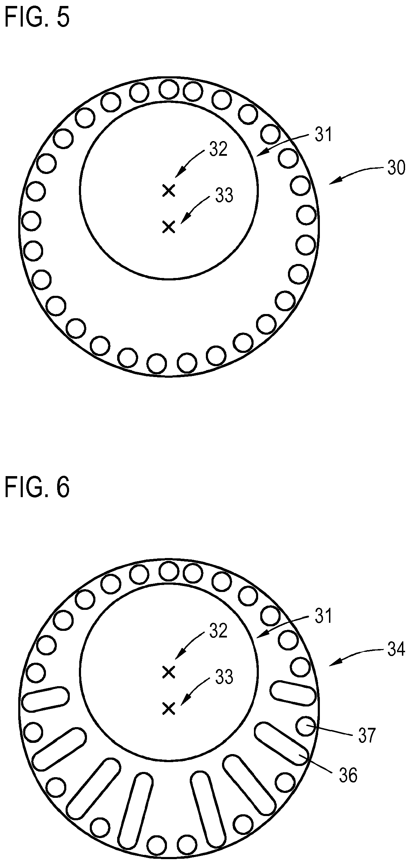

Fig. 5 zeigt eine weitere Bypasseinrichtung 30, die sich von der in Fig. 1 und 2 genutzten Bypasseinrichtung 16 dadurch unterscheidet, dass eine Ausnehmung 31 zur Aufnahme des Messrohrs 11 gegenüber der Mitte der Bypasseinrichtung 30 versetzt angeordnet ist.

Dies führt dazu, dass eine in Strömungsrichtung verlaufende Mittelgerade 32 des Messrohrs gegenüber einer in Strömungsrichtung verlaufenden Mittelgerade 33 des Außenrohrs 9 versetzt ist. Dies kann dazu führen, die Rotationssymmetrie eines durch die Messeinrichtung 1 geführten Strömungsprofils gebrochen wird, wodurch ein Strömungsverhalten stabilisiert werden kann.

Um die Symmetrie des Strömungsprofils weiter zu reduzieren und/oder einen Strömungswiderstand des Ultraschallzählers 1 weiter zu reduzieren, können, wie für die Bypasseinrichtung 34 in Fig. 6 dargestellt ist, zudem die radialen Ausdehnungen der Bypasskanäle 36 variiert werden. Prinzipiell wäre es möglich, die Variation der Ausdehnung für alle Bypasskanäle durchzuführen. Im gezeigten Ausführungsbeispiel werden jedoch abwechselnd Bypasskanäle 37 mit umlaufend konstanten Profilen und Bypasskanälen 36 genutzt, deren Radialausdehnung von der Position in Umfangsrichtung des Messrohres 11 abhängt.

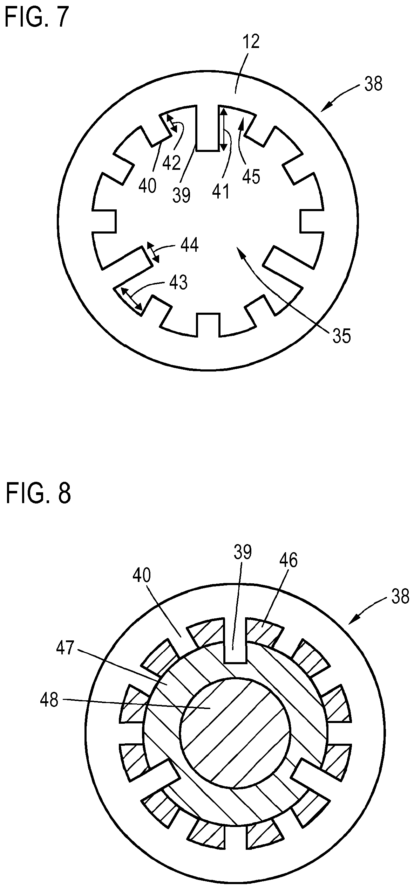

Wie bereits eingangs erläutert kann alternativ oder ergänzend zur Nutzung eines Bypasses 15 zur Führung eines Teils des Fluidvolumens um das Messrohr 11, ein Messrohr genutzt, werden das verschieden hohe Vorsprünge aufweist. Erfindungsgemäß ist in Fig. 7 das Messrohr 38 dargestellt, das drei erste Vorsprünge 39 und neun zweite Vorsprünge 40 aufweist. Die ersten Vorsprünge 39 weisen eine Vorsprunghöhe 41, also eine Höhe, mit der sie über die Seitenwand 25 hinausragen, auf, die 1,5-mal bis 2-mal so groß ist wie die Vorsprungshöhe 42 der zweiten Vorsprünge 40. Die Vorsprungshöhe der zweiten Vorsprünge 40 kann 0,5-mal bis 1,1-mal so groß sein wie der Abstand 43 zwischen benachbarten Vorsprüngen 39, 40. Die Breite 44 der Vorsprünge 39, 40 kann insbesondere schmaler sein als der Abstand 43 wischen den Vorsprüngen 39, 40, um den Strömungswiderstand des Messrohrs 38 bei hohen Durchflussmengen zu minimieren. Das vom Durchflussvolumen abhängige Strömungsverhalten in dem Messrohr 38 wird im Folgenden mit Bezug auf Fig. 8 erläutert. Der Strömungsquerschnitt 35 des Messrohrs 38 kann für eine näherungsweise Beschreibung des Strömungsverhaltens in einen Randbereich 46, einen Mittelbereich 47 und einen Kernbereich 6 unterteilt werden, wobei der in Fig. 1 dargestellte Ultraschallstrahl 5 vorzugsweise durch den Kernbereich 48 geführt wird, das heißt, dass der Messbereich 6 innerhalb des Kernbereichs 48 liegt.

Wird ein relativ geringes Strömungsvolumen durch das Messrohr 38 geführt, so ist die Strömung in den Bereichen 46, 47 und 48 jeweils laminar. Da das Fluid im Kernbereich 48 am weitesten von der Innenwand 45 beabstandet ist, strömt es dort am schnellsten, während es im Randbereich 46 aufgrund des geringen Wandabstands am langsamsten strömt. Bereits bei relativ niedrigem Durchfluss kann aufgrund der großen Wandabstände die Strömung im Kernbereich 48 turbulent sein.

Wird das Durchflussvolumen weiter erhöht, schlägt zunächst die Strömung in dem Mittelbereich 47 zu einer turbulenten Strömung um, womit der Anteil des gesamten Volumenstroms, der in dem Mittelbereich 47 transportiert wird, zunimmt. Somit steigt die Strömungsgeschwindigkeit im Kernbereich 48 durch den Strömungsumschlag in dem Mittelbereichen 47 langsamer. Die Strömung in den Randbereichen 46 bleibt zunächst laminar.

Bei einer weiteren Erhöhung des Volumenstroms schlägt auch die Strömung in den Randbereichen 46 zu einer turbulenten Strömung um. Somit sind gegenüber geringen Durchflüssen sowohl die Randbereiche 46 als auch der Mittelbereich 47 stärker am Fluidtransport beteiligt, womit auch durch diesen Strömungsumschlag ein Anstieg der Strömungsgeschwindigkeit im Kernbereich 48 mit dem Volumenstrom reduziert wird.

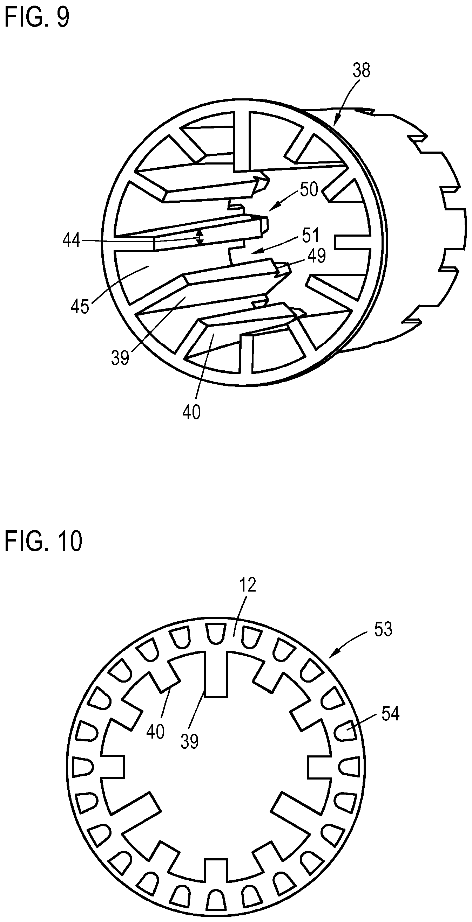

Weitere Einzelheiten zum Aufbau des Messrohrs 38 sind in Fig. 9 dargestellt, die eine dreidimensionale Ansicht des Messrohrs 38 zeigt. In dieser Darstellung ist zu erkenne, dass die Vorsprungbreite 44 sowohl der ersten Vorsprünge 39 als auch der zweiten Vorsprünge 40 zunächst in Richtung zum Fluidauslass hin zunimmt. Kurz vor dem fluidauslassseitigen Ende des Messrohrs 38 beginnt ein fluidauslassseitiger Abschnitt 50 des Messrohrs 38, in dem die Vorsprungbreite 44 der Vorsprünge 39, 40 wieder abnimmt. Im Übergang dieser Bereiche reduziert sich die jeweilige Vorsprunghöhe 41, 42 an einer Kante 49. In dem fluidauslassseitigen Abschnitt 50 ist die Innenwand 45 zudem in einem jeweiligen zu den Vorsprüngen 39, 40 benachbarten Zwischenbereiche 51 unterbrochen, um einer Fluidstauung, beispielsweise an dem in Fig. 1 gezeigten Reflexionselement, entgegenzuwirken.

Fig. 10 zeigt ein Ausführungsbeispiel eines Messrohrs 53, das, wie bereits das in Fig. 7 dargestellte Messrohr 38, Vorsprünge 39, 40 mit voneinander unterschiedlicher Vorsprunghöhe aufweist. Zusätzlich sind bei dem Messrohr 53 jedoch in der Außenwand des Messrohrs Bypasskanäle 54 vorgesehen. Durch die zusätzliche Nutzung von Bypasskanälen kann der Dynamikbereich eines Ultraschallzählers, der dieses Messrohr 53 nutzt, weiter erhöht werden. Um die Herstellung des Ultraschallzählers zu vereinfachen, werden die Bypasskanäle 54 unmittelbar durch die Seitenwand 12 des Messrohrs 53 ausgebildet. Alternativ wäre jedoch auch eine separate Bypasseinrichtung nutzbar, wie sie zu Fig. 1 bis 6 erläutert wurde. Andererseits kann statt den separaten Bypasseinrichtungen auch jeweils ein Messrohr genutzt werden, das die Bypasskanäle selbst ausbildet.

Die Bypasskanäle 54 können, wie vorangehend erläutert, deutlich kürzer sein als das Messrohr. Um dies bei der gezeigten einteiligen Ausbildung von Messrohr und Bypasseinrichtung zu ermögliche, kann die Seitenwand 12 des Messrohrs 53 in dem Bereich, in dem die Bypasskanäle 54 ausgebildet werden sollen, eine größere Wandstärke aufweisen, wobei diese zusätzliche Wandstärke axial von den Bypasskanälen 54 durchsetzt wird.

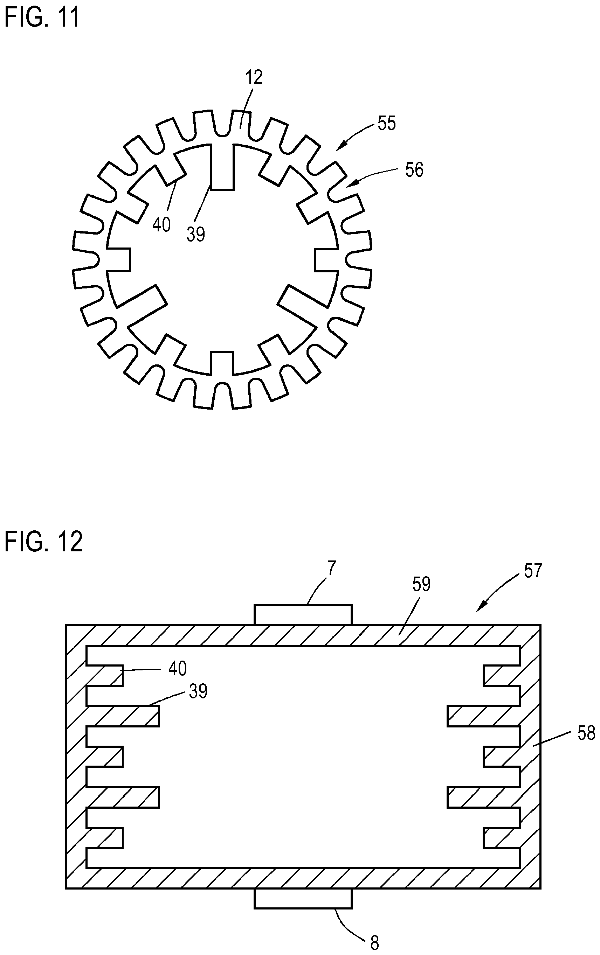

Die Bypasskanäle können, wie schematisch in Fig. 11 für das Messrohr 55 dargestellt ist, auch dadurch gebildet werden, dass an einer Außenseite der Seitenwand 12 des Messrohrs 55 Vorsprünge vorgesehen sind, die sich vorzugsweise bis zu der in Fig. 1 dargestellten Innenwand des Außenrohrs 9 erstrecken.

Die bisherigen Ausführungsbeispiele zeigten Messrohre 11, 38, 53, 55, die einen abgesehen von den Vorsprüngen im Wesentlichen runden Strömungsquerschnitt aufweisen, wobei die Vorsprünge im Wesentlichen gleichmäßig in Umfangsrichtung verteilt sind. Es ist jedoch, wie beispielhaft in Fig. 12 dargestellt ist, auch möglich, dass ein rechteckiges Messrohr 57 oder auch eine beliebige andere Querschnittsform verwendet wird. Die Vorsprünge 39, 40 können hierbei nur an einigen von mehreren gewinkelt zueinander stehenden Seitenwänden 58, 59 angeordnet sein bzw. nur in Teilen der Oberfläche der Seitenwand in Umfangsrichtung.

Das gezeigte Messrohr 57 erlaubt beispielsweise eine diagonale Durchstrahlung des Messrohrs, wenn die Ultraschallwandler 7, 8 an den flachen Seitenwänden 59, die keine Vorsprünge aufweisen, angeordnet sind. Hierduch wird vermieden, dass eine Messung in einem zentralen Messbereich durch die Vorsprünge 39, 40 gestört wird, wobei dennoch der vorangehend beschriebene vergrößerte Dynamikbereich der Messung erreicht werden kann.

### Bezugszeichenliste

- 1: Ultraschallzähler
- 2: Fluideinlass
- 3: Fluidauslass
- 4: Strömungskanal
- 5: Ultraschallstrahl
- 6: Messbereich
- 7: Ultraschallwandler
- 8: Ultraschallwandler
- 9: Außenrohr
- 10: Reflexionselement
- 11: Messrohr
- 12: Seitenwand
- 13: Vorsprung
- 14: Rille
- 15: Bypass
- 16: Bypasseinrichtung
- 17: Bypasskanal
- 18: Bypassvolumen
- 19: Bypassvolumen
- 20: Zwischenbereich
- 21: Bypasseinrichtung
- 22: Bypasskanal
- 23: Bypasskanal
- 24: Bypasseinrichtung
- 25: Innenfläche
- 26: Vorsprung
- 27: Vorsprung
- 28: Seitenwand
- 29: Seitenwand
- 30: Bypasseinrichtung
- 31: Ausnehmung
- 32: Mittelgerade
- 33: Mittelgerade
- 34: Bypasseinrichtung
- 35: Strömungsquerschnitt
- 36: Bypasskanal
- 37: Bypasskanal
- 38: Messrohr
- 39: Vorsprung
- 40: Vorsprung
- 41: Vorsprunghöhe
- 42: Vorsprunghöhe
- 43: Abstand
- 44: Vorsprungbreite
- 45: Innenwand
- 46: Randbereich
- 47: Mittelbereich
- 48: Kernbereich
- 49: Kante
- 50: Abschnitt
- 51: Zwischenbereich
- 52: Außenfläche
- 53: Messrohr
- 54: Bypasskanal
- 55: Messrohr
- 56: Bypasskanal
- 57: Messrohr
- 58: Seitenwand
- 59: Seitenwand

## Patentansprüche

1. Ultraschallzähler zur Erfassung einer Durchflussmenge eines Fluids mit einem Fluideinlass (2), einem Fluidauslass (3) und einem den Fluideinlass (2) mit dem Fluidauslass (3) verbindenden Strömungskanal (4), wobei der Strömungskanal (4) ein Messrohr (38, 53, 55, 57) aufweist, das sich geradlinig in eine Strömungsrichtung erstreckt, wobei das Messrohr (38, 53, 55, 57) mehrere Vorsprünge (39, 40) aufweist, die an einer Innenwand (45) einer den Strömungsquerschnitt (35) des Messrohrs (38, 53, 55, 57) begrenzenden Seitenwand (12, 58) des Messrohrs (38, 53, 55, 57) ausgebildet sind und sich über zumindest einen Abschnitt der Länge des Messrohrs (38, 53, 55, 57) in die Strömungsrichtung und mit einer vorgegebenen Vorsprunghöhe (41, 42) gewinkelt, insbesondere senkrecht, zur Seitenwand (12, 58) erstrecken, **dadurch gekennzeichnet, dass** wenigstens zwei der Vorsprünge (39, 40) voneinander unterschiedliche Vorsprunghöhen (41, 42) aufweisen, wobei das Messrohr (38, 53, 55, 57) mehrere erste Vorsprünge (39) aufweist, deren Vorsprunghöhe (41) größer oder gleich einer Grenzvorsprunghöhe ist und mehrere zweite Vorsprünge (40), deren Vorsprunghöhe (42) kleiner als die Grenzvorsprunghöhe ist, wobei in Umfangsrichtung des Messrohrs (38) zwischen zwei an der Innenwand (45) ausgebildeten ersten Vorsprüngen (39) jeweils wenigstens ein, vorzugsweise wenigstens zwei, zweite Vorsprünge (40) ausgebildet sind.

2. Ultraschallzähler nach Anspruch 1, **dadurch gekennzeichnet, dass** die Vorsprunghöhe (41) der ersten Vorsprünge (39) zwischen 1,5-mal und 2-mal so groß ist wie die Vorsprunghöhe (42) der zweiten Vorsprünge (40) und/oder dass die Vorsprunghöhe (42) der zweiten Vorsprünge (40) zwischen 0,5-mal und 1,1-mal so groß ist wie der Abstand (43) zwischen in Umfangsrichtung des Messrohrs benachbarten Vorsprüngen (39, 40).

3. Ultraschallzähler nach einem der vorangehenden Ansprüche, **dadurch gekennzeichnet, dass** in zumindest einem Abschnitt des Messrohrs (38, 53, 55, 57) eine Vorsprungbreite (44) wenigstens eines der Vorsprünge (39, 40) jeweils zum Fluidauslass (3) hin zunimmt.

4. Ultraschallzähler nach einem der vorangehenden Ansprüche, **dadurch gekennzeichnet, dass** in einem fluidauslassseitigen Abschnitt (50) des Messrohrs (38, 53, 55, 57) die Seitenwand (12, 58) des Messrohrs (38, 53, 55, 57) an verschiedenen Positionen in Umfangsrichtung an verschiedenen Positionen in Strömungsrichtung endet, wobei insbesondere vorgesehen ist, dass sich die Seitenwand (12, 58) in jenen Bereichen in Umfangsrichtung, an denen die Vorsprünge (39, 40) ausgebildet sind, weiter in Richtung des Fluidauslasses (3) erstreckt als in in Umfangsrichtung zwischen diesen Bereichen liegenden Zwischenbereichen (20, 51).

5. Ultraschallzähler nach Anspruch 4, **dadurch gekennzeichnet, dass** in dem fluidauslassseitigen Abschnitt (50) die oder eine Vorsprungbreite (44) wenigstens eines der Vorsprünge (39, 40) zum Fluidauslass (3) hin abnimmt.

6. Ultraschallzähler nach Anspruch 4 oder 5, **dadurch gekennzeichnet, dass** die Vorsprunghöhe (41, 42) wenigstens eines der Vorsprünge (39, 40) an jener Position in Strömungsrichtung stufenartig reduziert wird, an der in einem in Umfangsrichtung des Messrohrs zu dem Vorsprung benachbarten Zwischenbereich (51) des Messrohrs (38) die dortige Seitenwand (12, 58) endet.

7. Ultraschallzähler nach einem der vorangehenden Ansprüche, **dadurch gekennzeichnet, dass** die oder eine Vorsprungbreite (44) der Vorsprünge (39, 40) für wenigstens zwei der Vorsprünge (39, 40) voneinander unterschiedlich ist und/oder dass ein Abstand (43) zwischen den Vorsprüngen (39, 40) in Umfangsrichtung des Messrohrs (38) für wenigstens zwei Paare von in der Umfangsrichtung zueinander benachbarten der Vorsprünge (39, 40) voneinander unterschiedlich ist.

8. Ultraschallzähler nach einem der vorangehenden Ansprüche, **dadurch gekennzeichnet, dass** die oder eine Vorsprungbreite (44) der Vorsprünge (39, 40) zwischen 0,7 mm und 2,0 mm ist.

9. Ultraschallzähler nach einem der vorangehenden Ansprüche, **dadurch gekennzeichnet, dass** eine Vorsprunglänge der Vorsprünge (39, 40) in Strömungsrichtung größer ist als die Vorsprunghöhe (41, 42) und/oder dass die oder eine Vorsprungbreite (44) der Vorsprünge (39, 40) kleiner ist als die Vorsprunghöhe (39, 40).

10. Ultraschallzähler nach einem der vorangehenden Ansprüche, **dadurch gekennzeichnet, dass** der Strömungskanal (4) wenigstens einen Bypass (15) aufweist, durch den ein Teil eines durch den Strömungskanal (4) strömenden Fluids an dem Messrohr (38, 53, 55, 57) vorbeiführbar ist, wobei der Bypass (15) zumindest abschnittsweise durch mehrere separate Bypasskanäle (17, 22, 23, 36, 37) gebildet wird, wobei insbesondere vorgesehen ist, dass der Strömungsquerschnitt jedes der Bypasskanäle (17, 22, 23, 36, 37) jeweils kleiner ist als der Strömungsquerschnitt (35) des Messrohrs (38, 53, 55, 57).

11. Ultraschallzähler nach Anspruch 10, **dadurch gekennzeichnet, dass** die Bypasskanäle (17, 22, 23, 36, 37) kürzer sind als das Messrohr (38, 53, 55, 57), wobei die Bypasskanäle (17, 22, 23, 36, 37) fluideinlassseitig und/oder fluidauslassseitig in ein gemeinsames Bypassvolumen (18, 19) münden, das die Bypasskanäle (17, 22, 23, 36, 37) fluidisch mit dem Strömungskanal (4) koppelt, wobei insbesondere vorgesehen ist, dass die Bypasskanäle (17, 22, 23, 36, 37) in Strömungsrichtung um wenigstens den Faktor 2, insbesondere um wenigstens den Faktor 5 oder 10, kürzer als das Messrohr (38, 53, 55, 57) sind.

12. Ultraschallzähler nach Anspruch 10 oder 11, **dadurch gekennzeichnet, dass** die mehreren Bypasskanäle (17, 22, 23, 36, 37) in Umfangsrichtung des Messrohrs um das Messrohr (38, 53, 55, 57) herum verteilt angeordnet sind.

13. Ultraschallzähler nach einem der Ansprüche 10 bis 12, **dadurch gekennzeichnet, dass** die mehreren Bypasskanäle (17, 22, 23, 36, 37) zwischen einem den Strömungskanal abschnittsweise ausbildenden Außenrohr (9) und dem Messrohr (38, 53, 55, 57) angeordnet sind, wobei insbesondere vorgesehen ist, dass die Bypasskanäle (17, 22, 23, 36, 37) durch eine zwischen dem Messrohr (38, 53, 55, 57) und dem Außenrohr (9) angeordnete Bypasseinrichtung (16, 21, 24, 30, 34) oder durch diese gemeinsam mit einer Außenwand des Messrohrs (38, 53, 55, 57) und/oder einer Innenwand des Außenrohrs (9) gebildet werden.

14. Ultraschallzähler nach Anspruch 13, **dadurch gekennzeichnet, dass** das Außenrohr (9) das Messrohr (38, 53, 55, 57) vollständig aufnimmt, wobei eine in Strömungsrichtung verlaufende Mittelgerade (32) des Messrohrs (11, 38, (38, 53, 55 57) gegenüber einer in Strömungsrichtung verlaufenden Mittelgerade (33) des Außenrohrs (9) versetzt ist.

15. Ultraschallzähler nach einem der Ansprüche 10 bis 14, **dadurch gekennzeichnet, dass** wenigstens zwei der Bypasskanäle (17, 22, 23, 36, 37) voneinander unterschiedliche Längen in Strömungsrichtung und/oder unterschiedliche Querschnittsformen aufweisen und/oder dass für wenigstens einen der Bypasskanäle (17, 22, 23, 36, 37) zwei diesen Bypasskanal (17, 22, 23, 36, 37) in Umfangsrichtung des Messrohrs begrenzende Seitenwände (28, 29) an in Strömungsrichtung unterschiedlichen Positionen enden.

## Claims

1. Ultrasonic counter for detecting a flow rate of a fluid, having a fluid inlet (2), a fluid outlet (3), and a flow duct (4) which connects the fluid inlet (2) to the fluid outlet (3), wherein the flow duct (4) has measuring tube (38, 53, 55, 57) which extends so as to be rectilinear in a flow direction, wherein the measuring tube (38, 53, 55, 57) has a plurality of protrusions (39, 40) which are configured on an internal wall (45) of a lateral wall (12, 58) of the measuring tube (38, 53, 55, 57) that delimits the flow cross section (35) of the measuring tube (38, 53, 55, 57) and in the flow direction extend across at least one portion of the length of the measuring tube (38, 53, 55, 57) and by way of a predefined protrusion height (41, 42) extend so as to be angular, in particular perpendicular, to the lateral wall (12, 58), **characterized in that** at least two of the protrusions (39, 40) have mutually dissimilar protrusion heights (41, 42), wherein the measuring tube (38, 53, 55, 57) has a plurality of first protrusions (39), of which the protrusion height (41) is greater than or equal to a critical protrusion height, and a plurality of second protrusions (40), of which the protrusion height (42) is less than the critical protrusion height, wherein at least one, preferably at least two, second protrusions (40) is/are in each case configured in the circumferential direction of the measuring tube (38), so as to be between two first protrusions (39) configured on the internal wall (45) .

2. Ultrasonic counter according to Claim 1, **characterized in that** the protrusion height (41) of the first protrusions (39) is between 1.5 times and 2 times the protrusion height (42) of the second protrusions (40), and/or **in that** the protrusion height (42) of the second protrusions (40) is between 0.5 times and 1.1 times the spacing (43) between protrusions (39, 40) that are adjacent in the circumferential direction of the measuring tube.

3. Ultrasonic counter according to one of the preceding claims, **characterized in that** in at least one portion of the measuring tube (38, 53, 55, 57) a protrusion width (44) of at least one of the protrusions (39, 40) increases in each case towards the fluid outlet (3).

4. Ultrasonic counter according to one of the preceding claims, **characterized in that** in a fluid outlet-proximal portion (50) of the measuring tube (38, 53, 55, 57) the lateral wall (12, 58) of the measuring tube (38, 53, 55, 57) at different positions in the circumferential direction terminates at different positions in the flow direction, wherein it is provided in particular that the lateral wall (12, 58) in those regions in the circumferential direction where the protrusions (39, 40) are configured extends further in the direction of the fluid outlet (3) than in intermediate regions (20, 51) that in the circumferential direction lie between those regions.

5. Ultrasonic counter according to Claim 4, **characterized in that** in the fluid outlet-proximal portion (50) the or a protrusion width (44) of at least one of the protrusions (39, 40) decreases towards the fluid outlet (3).

6. Ultrasonic counter according to Claim 4 or 5, **characterized in that** the protrusion height (41, 42) of at least one of the protrusions (39, 40) is reduced in the manner of steps at that position in the flow direction where, in an intermediate region (51) of the measuring tube (38) that in the circumferential direction of the measuring tube is adjacent to the protrusion, the local lateral wall (12, 58) terminates.

7. Ultrasonic counter according to one of the preceding claims, **characterized in that** the or a protrusion width (44) of the protrusions (39, 40) differs for at least two of the protrusions (39, 40), and/or **in that** a spacing (43) between the protrusions (39, 40) in the circumferential direction of the measuring tube (38) differs for at least two pairs of the protrusions (39, 40) that are mutually adjacent in the circumferential direction.

8. Ultrasonic counter according to one of the preceding claims, **characterized in that** the or a protrusion width (44) of the protrusions (39, 40) is between 0.7 mm and 2.0 mm.

9. Ultrasonic counter according to one of the preceding claims, **characterized in that** a protrusion length of the protrusions (39, 40) in the flow direction is greater than the protrusion height (41, 42), and/or **in that** the or a protrusion width (44) of the protrusions (39, 40) is less than the protrusion height (39, 40).

10. Ultrasonic counter according to one of the preceding claims, **characterized in that** the flow duct (4) has at least one bypass (15) by way of which part of a fluid flowing through the flow duct (4) is able to be guided past the measuring tube (38, 53, 55, 57), wherein the bypass (15) at least in portions is formed by a plurality of separate bypass ducts (17, 22, 23, 36, 37), wherein it is provided in particular that the flow cross section of each of the bypass ducts (17, 22, 23, 36, 37) is in each case smaller than the flow cross section (35) of the measuring tube (38, 53, 55, 57).

11. Ultrasonic counter according to Claim 10, **characterized in that** the bypass ducts (17, 22, 23, 36, 37) are shorter than the measuring tube (38, 53, 55, 57), wherein the bypass ducts (17, 22, 23, 36, 37) proximal to the fluid inlet and/or proximal to the fluid outlet open into a common bypass volume (18, 19) which fluidically couples the bypass ducts (17, 22, 23, 36, 37) to the flow duct (4), wherein it is provided in particular that the bypass ducts (17, 22, 23, 36, 37) in the flow direction are shorter than the measuring tube (38, 53, 55, 57) by at least a factor of 2, in particular by at least a factor of 5 or 10.

12. Ultrasonic counter according to Claim 10 or 11, **characterized in that** the plurality of bypass ducts (17, 22, 23, 36, 37) are disposed so as to be distributed in the circumferential direction of the measuring tube about the measuring tube (38, 53, 55, 57).

13. Ultrasonic counter according to one of Claims 10 to 12, **characterized in that** the plurality of bypass ducts (17, 22, 23, 36, 37) are disposed between an external tube (9), which in portions configures the flow duct, and the measuring tube (38, 53, 55, 57), wherein it is provided in particular that the bypass ducts (17, 22, 23, 36, 37) are formed by a bypass installation (16, 21, 24, 30, 34) disposed between the measuring tube (38, 53, 55, 57) and the external tube (9), or formed by said bypass installation (16, 21, 24, 30, 34) conjointly with an external wall of the measuring tube (38, 53, 55, 57) and/or an internal wall of the external tube (9).

14. Ultrasonic counter according to Claim 13, **characterized in that** the external tube (9) completely receives the measuring tube (38, 53, 55, 57), wherein a rectilinear centreline (32) running in the flow direction of the measuring tube (11, 38, 38, 53, 55, 57) is offset in relation to a rectilinear centreline (33) running in the flow direction of the external tube (9).

15. Ultrasonic counter according to one of Claims 10 to 14, **characterized in that** at least two of the bypass ducts (17, 22, 23, 36, 37) have mutually different lengths in the flow direction and/or different cross-sectional shapes, and/or **in that** for at least one of the bypass ducts (17, 22, 23, 36, 37) two lateral walls (28, 29), which delimit this bypass duct (17, 22, 23, 36, 37) in the circumferential direction of the measuring tube, terminate at different positions in the flow direction.

## Revendications

1. Compteur à ultrasons destiné à détecter le débit d'un fluide, ledit compteur à ultrasons comprenant une entrée de fluide (2), une sortie de fluide (3) et un canal d'écoulement (4) reliant l'entrée de fluide (2) à la sortie de fluide (3), le canal d'écoulement (4) comportant un tube de mesure (38, 53, 55, 57) qui s'étend de manière rectiligne dans une direction d'écoulement, le tube de mesure (38, 53, 55, 57) comportant une pluralité de saillies (39, 40) qui sont prévues sur une paroi intérieure (45) d'une paroi latérale (12, 58) du tube de mesure (38, 53, 55, 57) qui délimite la section transversale d'écoulement (35) du tube de mesure (38, 53, 55, 57), qui sont coudées sur au moins une portion de la longueur du tube de mesure (38, 53, 55, 57) dans la direction d'écoulement avec une hauteur de saillie spécifiée (41, 42) et qui s'étendent notamment perpendiculairement à la paroi latérale (12, 58), **caractérisé en ce qu'**au moins deux des saillies (39, 40) ont des hauteurs différentes (41, 42), le tube de mesure (38, 53, 55, 57) comportant une pluralité de premières saillies (39) dont la hauteur (41) est supérieure ou égale à une hauteur limite et une pluralité de deuxièmes saillies (40) dont la hauteur (42) est inférieure à la hauteur limite, au moins une, de préférence deux, deuxièmes saillies (40) étant prévues dans la direction circonférentielle du tube de mesure (38) à chaque fois entre deux premières saillies (39) formées sur la paroi intérieure (45).

2. Compteur à ultrasons selon la revendication 1, **caractérisé en ce que** la hauteur (41) des premières saillies (39) est comprise entre 1,5 fois et 2 fois la hauteur (42) des deuxièmes saillies (40) et/ou **en ce que** la hauteur (42) des deuxièmes saillies (40) est comprise entre 0,5 fois et 1,1 fois la distance (43) entre des saillies (39, 40) adjacentes dans la direction circonférentielle du tube de mesure.

3. Compteur à ultrasons selon l'une des revendications précédentes, **caractérisé en ce que** dans au moins une portion du tube de mesure (38, 53, 55, 57) une largeur (44) d'au moins une des saillies (39, 40) augmente à chaque fois en direction de la sortie de fluide (3).

4. Compteur à ultrasons selon l'une des revendications précédentes, **caractérisé en ce que**, dans une portion côté sortie de fluide (50) du tube de mesure (38, 53, 55, 57), la paroi latérale (12, 58) du tube de mesure (38, 53, 55, 57) se termine, pour différentes positions dans la direction circonférentielle, à différentes positions dans la direction d'écoulement, en particulier, la paroi latérale (12, 58) étant prévue pour s'étendre plus loin en direction de la sortie de fluide (3) dans les zones de la direction circonférentielle où les saillies (39, 40) sont formées que dans les zones intermédiaires (20, 51) situées entre ces zones dans la direction circonférentielle.

5. Compteur à ultrasons selon la revendication 4, **caractérisé en ce que** dans la portion côté sortie de fluide (50) la ou une largeur (44) d'au moins une des saillies (39, 40) diminue en direction de la sortie de fluide (3).

6. Compteur à ultrasons selon la revendication 4 ou 5, **caractérisé en ce que** la hauteur (41, 42) d'au moins une des saillies (39, 40) est réduite par paliers à la position dans la direction d'écoulement où la paroi latérale (12, 58) se termine dans une zone intermédiaire (51) du tube de mesure (38) qui est adjacente à la saillie dans la direction circonférentielle du tube de mesure.

7. Compteur à ultrasons selon l'une des revendications précédentes, **caractérisé en ce que** pour au moins deux des saillies (39, 40) la ou une largeur (44) des saillies (39, 40) est différente l'une de l'autre et/ou **en ce que**, pour au moins deux paires de saillies (39, 40) adjacentes l'une à l'autre dans la direction circonférentielle, une distance (43) entre les saillies (39, 40) dans la direction circonférentielle du tube de mesure (38) est différente l'une de l'autre.

8. Compteur à ultrasons selon l'une des revendications précédentes, **caractérisé en ce que** la ou une largeur (44) des saillies (39, 40) est comprise entre 0,7 mm et 2,0 mm.

9. Compteur à ultrasons selon l'une des revendications précédentes, **caractérisé en ce qu'**une longueur des saillies (39, 40) dans la direction d'écoulement est supérieure à la hauteur (41, 42) des saillies et/ou **en ce que** la ou une largeur (44) des saillies (39, 40) est inférieure à la hauteur des saillies (39, 40).

10. Compteur à ultrasons selon l'une des revendications précédentes, **caractérisé en ce que** le canal d'écoulement (4) comporte au moins une dérivation (15) permettant à une partie d'un fluide, qui s'écoule à travers le canal d'écoulement (4), de passer devant le tube de mesure (38, 53, 55, 57), la dérivation (15) étant formée au moins par portions par une pluralité de canaux de dérivation séparés (17, 22, 23, 36, 37), en particulier la section transversale d'écoulement de chacun des canaux de dérivation (17, 22, 23, 36, 37) étant prévue pour être inférieure à la section transversale d'écoulement (35) du tube de mesure (38, 53, 55, 57) .

11. Compteur à ultrasons selon la revendication 10, **caractérisé en ce que** les canaux de dérivation (17, 22, 23, 36, 37) sont plus courts que le tube de mesure (38, 53, 55, 57), les canaux de dérivation (17, 22, 23, 36, 37) débouchant, du côté entrée de fluide et/ou du côté sortie de fluide, dans un volume de dérivation commun (18, 19) qui accouple fluidiquement les canaux de dérivation (17, 22, 23, 36, 37) au canal d'écoulement (4), les canaux de dérivation (17, 22, 23, 36, 37) étant notamment prévus pour être plus courts que le tube de mesure (38, 53, 55, 57) dans la direction d'écoulement d'au moins un facteur 2, en particulier d'un facteur d'au moins 5 ou 10.

12. Compteur à ultrasons selon la revendication 10 ou 11, **caractérisé en ce que** la pluralité de canaux de dérivation (17, 22, 23, 36, 37) sont répartis autour du tube de mesure (38, 53, 55, 57) dans la direction circonférentielle du tube de mesure.

13. Compteur à ultrasons selon l'une des revendications 10 à 12, **caractérisé en ce que** la pluralité de canaux de dérivation (17, 22, 23, 36, 37) sont disposés entre un tube extérieur (9), formant par portions le canal d'écoulement, et le tube de mesure (38, 53, 55, 57), en particulier les canaux de dérivation (17, 22, 23, 36, 37) étant prévus pour être formés par un dispositif de dérivation (16, 21, 24, 30, 34) qui est disposé entre le tube de mesure (38, 53, 55, 57) et le tube extérieur (9) ou par ledit dispositif de dérivation conjointement avec une paroi extérieure du tube de mesure (38, 53, 55, 57) et/ou une paroi intérieure du tube extérieur (9).

14. Compteur à ultrasons selon la revendication 13, **caractérisé en ce que** le tube extérieur (9) reçoit complètement le tube de mesure (38, 53, 55, 57), une ligne droite médiane (32) du tube de mesure (11, 38, 38, 53, 55, 57), qui s'étend dans la direction d'écoulement, étant décalée par rapport à une ligne droite médiane (33) du tube extérieur (9) qui s'étend dans la direction d'écoulement.

15. Compteur à ultrasons selon l'une des revendications 10 à 14, **caractérisé en ce qu'**au moins deux des canaux de dérivation (17, 22, 23, 36, 37) ont des longueurs différentes dans la direction d'écoulement et/ou des formes différentes en coupe transversale et/ou **en ce que**, pour au moins un des canaux de dérivation (17, 22, 23, 36, 37), deux parois latérales (28, 29), qui délimitent ce canal de dérivation (17, 22, 23, 36, 37) dans la direction circonférentielle du tube de mesure, se terminent à différentes positions dans la direction d'écoulement.
